# EUROPÄISCHE PATENTANMELDUNG

(11) **EP 3 153 293 A1**
(43) Veröffentlichungstag der Anmeldung: **12.04.2017**
(21) Anmeldenummer: 16191653.1
(22) Anmeldetag: 30.09.2016
(51) Int. Cl.: B29C 45/14, B29C 45/16

(54) **ELEKTRONISCHE BAUGRUPPE UND VERFAHREN ZUR HERSTELLUNG EINER ELEKTRONISCHEN BAUGRUPPE MITTELS SPRITZGIESSENS**

(30) Priorität: 07.10.2015 DE 102015117058
(71) Anmelder: Dr. Schneider Kunststoffwerke GmbH, 96317 Kronach-Neuses (DE)
(72) Erfinder: Schinzler, Claus, 96317 Kronach (DE)
(74) Vertreter: Pröll, Jürgen

(57) **Zusammenfassung**

Das erfindungsgemäße Verfahren gibt die Herstellungsschritte einer elektrischen Baugruppe an, die aus mindestens einer elektrischen Komponente besteht, die auf einer Folie angeordnet ist. Auf der Folie, die vorzugsweise aus Kunststoff besteht, ist die mindestens eine elektrische Komponente angeordnet. Außerdem sind elektrische Leiterbahnen auf der Folie vorhanden, die die mindestens eine elektrische Komponente mit einem Anschlussbereich mit elektrischen Kontaktstellen verbindet. Über diese Kontaktstellen und Leiterbahnen kann der elektrischen Komponente die notwendige elektrische Energie zum Betrieb zugeführt werden. Außerdem können Eingangs- und Ausgangssignale zugeführt und abgeführt werden. Bei der elektrischen Komponente handelt es sich z.B. um ein Display, ein Bedienelement oder eine Tastatur mit entsprechenden Tasten.

## Beschreibung

Die vorliegende Erfindung betrifft ein Verfahren zur Herstellung einer elektronischen Baugruppe sowie einer elektrischen Baugruppe mit den Merkmalen des Patentanspruches 1 und des Patentanspruches 18.

Die erfindungsgemäße elektrische Baugruppe besteht aus einer Folie mit auf- bzw. in der Folie angeordneten elektrischen/elektronischen Baugruppen, die in einem Spritzgusswerkzeug, insbesondere einem Kunststoffspritzgusswerkzeug - umspritzt wird. Das Verfahren umfasst die Verfahrensschritte zur Herstellung der elektrischen Baugruppe.

Verfahren zur Hinterspritzung von Folien sind bereits unter der Bezeichnung In-Mould-Verfahren, In-Mould-Decoration und In-Mould-Labeling bekannt. Beim In-Mould-Labeling wird eine Folie in eine Spritzgussform eingebracht und dann hinterspritzt und die gesamte Folie wird Bestandteil des gespritzen Körpers bzw. Kunststoffteils. Beim In-Mould-Decoration verwendet man ein sogenantes Rolle zu Rolle Verfahren, bei dem ein Folienband durch die Spritzgussform hindurchgeführt wird. Das Folienband weist eine Trägerschicht und eine Übertragungslage auf. Die Übertragungslage wird im Kunststoffspritzgussverfahren auf die Oberfläche des herzustellenden Kunststoffkörpers übertragen, die Trägerfolie wird nach dem Spritzgussvorgang aus der Spritzgussform entnommen und wieder auf eine Rolle aufgewickelt.

Aus der DE 10 2012 109 820 A1 ist ein durch ein In-Mould-Verfahren hergestellter Körper sowie das Verfahren zu dessen Herstellung bekannt. Es wird eine Folie, auf der sich elektrische/elektronische Komponenten befinden, in ein Spritzgusswerkzeug eingeführt und hinterspritzt. Die Kontaktierungsfläche, die auf der Folie ebenfalls angeordnet ist und dazu dient, um zu einem späteren Zeitpunkt die elektrischen Bauteile, die sich auf der Folie befinden zu kontaktieren. Diese Kontaktierungsfläche verbleibt ohne umgebenden Kunststoff, und steht nach der Hinterspritzung in Form eines Fähnchens ab.

Nachteilig hierbei ist, dass das Fähnchen aus demselben Folienmaterial wie die hinterspritzte Folie besteht, vom fertigen Körper absteht und daher leicht beschädigt werden kann oder abreißbar ist. Außerdem wir das Folienmaterial beim Spritzgussvorgang gestresst und es kann zu Veränderungen im Folienmaterial kommen, so dass es an Stabilität und Spannung verliert und daher die vorbeschriebenen Beschädigungsmöglichkeiten begünstigt.

Aufgabe der vorliegenden Erfindung ist es daher ein elektrisches/elektronisches Bauelement und ein Verfahren zu dessen Herstellung aufzuzeigen, dass im In-Mould-Labeling Verfahren hergestellt ist, jedoch ein abstehendes Fähnchen zur späteren Kontaktierung elektrisches/elektronisches Bauelement nicht benötigt wird.

Diese Aufgabe wird anhand der Merkmale des Patentanspruches 1 und des Patentanspruches 18 gelöst, vorteilhafte Ausgestaltung und Erfindung ergeben sich anhand der weiteren Beschreibung der Unteransprüche und der Figuren, an welcher ein konkretes Ausführungsbeispiel beschrieben ist.

Das erfindungsgemäße Verfahren gibt die Herstellungsschritte einer elektrischen Baugruppe an, die aus mindestens einer elektrischen Komponente besteht, die auf einer Folie angeordnet ist. Auf der Folie, die vorzugsweise aus Kunststoff besteht, ist die mindestens eine elektrische Komponente angeordnet. Außerdem sind elektrische Leiterbahnen auf der Folie vorhanden, die die mindestens eine elektrische Komponente mit einem Anschlussbereich mit elektrischen Kontaktstellen verbindet. Über diese Kontaktstellen und Leiterbahnen kann der elektrischen Komponente die notwendige elektrische Energie zum Betrieb zugeführt werden. Außerdem können Eingangs- und Ausgangssignale zugeführt und abgeführt werden. Bei der elektrischen Komponente handelt es sich z.B. um ein Display, ein Bedienelement oder eine Tastatur mit entsprechenden Tasten.

Das erfindungsgemäße Verfahren zur Herstellung einer elektrischen Baugruppe weist folgende Verfahrensschritte auf:
- Einbringen einer Folie in eine Spritzgussform, die aus mindestens zwei Werkzeughälften besteht, wobei die Folie mindestens eine auf oder in der Folie angeordnete elektrische Komponente und mindestens einen elektrischen Anschlussbereich mit elektrischen Kontaktstellen zur elektrischen Kontaktierung der mindestens einen elektrischen Komponente besitzt,
- Fixierung der Folie in der Spritzgussform,
- zumindest partielles Hinterspritzen der Folie in der Spritzgussform mit einem ersten Kunststoff, wobei im Verfahrensschritt nach lit a) der Anschlussbereich zur elektrischen Kontaktierung der mindestens einen elektrischen Komponente an mindestens einer Seite der Folie nicht mit dem ersten Kunststoff hinterspritzt wird,
   oder
   im Verfahrensschritt nach lit b) vor dem Hinterspritzen der Folie mit dem ersten Kunststoff auf dem Anschlussbereich der Folie zur elektrischen Kontaktierung Kontaktelemente aufgebracht oder in die Spritzgussform beim Anschlussbereich der Folie eingebracht und in der Spritzgussform fixiert werden, und diese Kontaktelemente eine elektrische Kontaktierung mit den elektrischen Kontaktstellen des Anschlussbereichs der Folie herstellen,
   oder
   im Verfahrensschritt nach lit c) vor dem Hinterspritzen der Folie mit dem ersten Kunststoff der Anschlussbereich der Folie mit einem zweiten Kunststoff zumindest partiell hinterspritzt oder umspritzt wird,
   oder
   im Verfahrensschritt nach lit d) die Folie vollständig mit dem ersten Kunststoff hinterspritzt wird;
- Entnahme der elektrischen Baugruppe aus der Spritzgussform.

In einer vorteilhaften Ausgestaltung der Erfindung nach Patentanspruch 2 ist vorgesehen, dass beim Verfahrensschritt nach lit a) ein vom Kunststoff freier Bereich um den Anschlussbereich ausgebildet wird, der zu elektrischen Kontaktierung der elektrischen Baugruppe der Folie mittels Kontaktmitteln dient. Durch die Aussparung des Kontaktbereichs ist es einfach möglich später die Kontaktstellen zu kontaktieren.

In einer vorteilhaften Ausgestaltung der Erfindung nach Patentanspruch 3 ist vorgesehen, dass der vom Kunststoff freie Bereich um den Anschlussbereich als mindestens eine Vertiefung in die elektrische Baugruppe ausgebildet wird oder der vom Kunststoff freie Bereich um den Anschlussbereich nach dem Spritgussvorgang einen Hohlraum ausbildet. Durch die Ausgestaltung eines freien Bereichs um den Anschlussbereich in Form einer Vertiefung oder eines Hohlraumes, ist der Anschlussbereich geschützt und kann nicht einfach oder unwillentlich beschädigt werden. Der Anschlussbereich ist damit geschützt ausgestaltet.

In einer vorteilhaften Ausgestaltung der Erfindung nach Patentanspruch 4 ist vorgesehen, dass die Vertiefung oder der Hohlraum die Form einer Steckvorrichtung ausbildet. Damit kann auf einfache Weise durch einfügen von Gegenkontakten durch Einstecken eine Kontaktierung erfolgen.

In einer vorteilhaften Ausgestaltung der Erfindung nach Patentanspruch 5 ist vorgesehen, dass beim Verfahrensschritt nach lit b) als Kontaktelemente Kontaktstifte angeordnet werden. Kontaktstifte sind noch immer eine gute Wahl zur Kontaktierung von elektrischen Baugruppen.

In einer vorteilhaften Ausgestaltung der Erfindung nach Patentanspruch 6 ist vorgesehen, dass die Kontaktstifte derart angeordnet werden, dass die elektrische Baugruppe mittels der Kontaktstifte in eine Steckerleiste einer anderen Baugruppe einsetzbar ist. Damit kann die elektrische Baugruppe in eine vorgesehene Steckerleiste eingesteckt werden.

In einer vorteilhaften Ausgestaltung der Erfindung nach Patentanspruch 7 ist vorgesehen, dass die Kontaktstifte in der zweiten Werkzeughälfte vor dem einlegen der Folie eingefügt werden und durch eine Vorrichtung in der zweiten Werkzeughälfte fixiert werden in einer Position, dass die einzufügende Folie mit ihrem Anschlussbereich und den dortigen Kontaktstellen auf den Kontaktstifte zu liegen kommt. Auf diese Weise werden die Kontaktstifte in die elektrische Baugruppe fest integriert und Bestandteil der elektrischen Baugruppe.

In einer vorteilhaften Ausgestaltung der Erfindung nach Patentanspruch 8 ist vorgesehen, dass die Kontaktstifte in der zweiten Werkzeughälfte mit den Kontaktstellen der Folie vor dem Einspritzen des ersten Kunststoffes mittels eines Lasers verschweißt oder mittels eines Klebers fixiert werden. Dadurch ist eine sichere Kontaktierung gewährleistet.

In einer vorteilhaften Ausgestaltung der Erfindung nach Patentanspruch 9 ist vorgesehen, dass beim Verfahrensschritt nach lit c) in einem ersten Schritt des Einspritzens von Kunststoff zunächst ein zweiter Kunststoff eingespritzt wird, der mit einer jeden der Kontaktstellen des Kontaktbereiches der Folie eine Verbindung eingeht, ohne dass sich diese Bereiche berühren und sich der zweite Kunststoff bis zum Rand der zweiten Werkzeugform erstreckt. Auf diese Weise werden, wenn der zweite Kunststoff ein elektrisch leitfähiger Kunststoff ist, die Kontaktstifte ersetzt und zugleich eine elektrische Verbindung der Kontaktstellen nach außen gewährleistet. Die Kontaktstellen sind dann einfach zugänglich.

In einer vorteilhaften Ausgestaltung der Erfindung nach Patentanspruch 10 ist vorgesehen, dass nach dem Einspritzen des zweiten Kunststoffes die Folie mit dem ersten Kunststoff hinterspritzt wird und durch den ersten Kunststoff der zweite Kunststoff zumindest partiell umhüllt wird. Damit werden quasi Leiterbahnen an den Rand des Körpers der elektrischen Baugruppe gezogen.

In einer vorteilhaften Ausgestaltung der Erfindung nach Patentanspruch 11 ist vorgesehen, dass der erste Kunststoff und der zweite Kunststoff in einem 2K-Verfahren verarbeitet werden. Damit kann in einem Spritzgusswerkzeug die elektrische Baugruppe hergestellt werden ohne dass diese in einem Arbeitsschritt aus der Spritzgussform entnommen werden muss.

In einer vorteilhaften Ausgestaltung der Erfindung nach Patentanspruch 12 ist vorgesehen, dass zum ersten Kunststoff und dem zweiten Kunststoff in einem 3K-Verfahren ein dritter Kunststoff in die Spritzgussform eingebracht wird und der erste Kunststoff, der zweite Kunststoff und der dritte Kunststoff am Anschlussbereich um eine jede Kontaktstelle Buchsen ausbilden. Es können der erste Kunststoff und der zweite Kunststoff aus dem gleichen Kunststoffmaterial bestehen. Es kann in die elektrische Komponente in einem Herstellungsverfahren mindestens eine Anschlussbuchse integriert werden, was die spätere Handhabung vereinfacht.

In einer vorteilhaften Ausgestaltung der Erfindung nach Patentanspruch 13 ist vorgesehen, dass die Buchsen zum Anstecken von Steckern vorgesehen werden, wobei die erste Buche eine Rundkontaktbuchse, die zweite Buchse eine USB-Buchse, die dritte Buchse eine LAN-Buchse und die vierte Buchse eine Schienenklemme realisiert. Durch die Ausgestaltung der Buchsen in Form von Normbuchsen ist die Handhabung und elektrische Anbindung einfach möglich.

In einer vorteilhaften Ausgestaltung der Erfindung nach Patentanspruch 14 ist vorgesehen, dass gemäß Verfahrensschritt lit c) oder lit d) nach der Entnahme der elektrischen Baugruppe im Anschlussbereich Löcher in die elektrische Baugruppe eingebracht werden, die bis zu den Kontaktstellen des Anschlussbereich reichen und die Kontaktstellen des Anschlussbereichs freilegen. Hierdurch wird der Herstellungsprozess vereinfacht und in einem nachfolgenden Schritt wird eine Kontaktierung vorgenommen.

In einer vorteilhaften Ausgestaltung der Erfindung nach Patentanspruch 15 ist vorgesehen, dass die Löcher mit einem Bohrer oder einem Laser eingebracht werden.

In einer vorteilhaften Ausgestaltung der Erfindung nach Patentanspruch 16 ist vorgesehen, dass in die Löcher Kontaktstifte eingefügt und verklebt oder verschweißt oder heißverstemmt werden.

In einer vorteilhaften Ausgestaltung der Erfindung nach Patentanspruch 17 ist vorgesehen, dass als erster Kunststoff ein elektrisch nicht leitfähiger Kunststoff verwendet wird, als zweiter Kunststoff ein elektrisch leitfähiger Kunststoff und als dritter Kunststoff ein elektrisch nicht leitfähiger Kunststoff eingesetzt wird.

Die erfindungsgemäße elektrische Baugruppe nach Patenanspruch 18 zeichnet sich dadurch aus, dass sie nach einem der vorangehenden Patentansprüche hergestellt ist und zumindest eine elektrische Komponente und einen zumindest partiell aus einem ersten Kunststoff bestehenden Körper aufweist, wobei die zumindest eine elektrische Komponente der elektrischen Baugruppe von einem ersten Kunststoff umschlossenen ist. Die elektrische Baugruppe weist einen Anschlussbereich mit aus dem Körper herausstehenden Kontaktstiften auf, welche die zumindest eine elektrische Komponente kontaktieren oder einen Anschlussbereich mit in den Körper eingebrachte Kontaktbuchsen auf, welche die zumindest eine elektrische Komponente kontaktieren.

Vorteile und Zweckmäßigkeiten sind der nachfolgenden Beschreibung in Verbindung mit der jeweiligen Figur zu entnehmen.

Die nachfolgende Beschreibung der Erfindung anhand eines konkreten Ausführungsbeispiels stellt keine Limitierung der Erfindung auf dieses konkrete Ausführungsbeispiel dar.

Es zeigt:
- FIG 1: eine schematische Darstellung einer geöffneten Spritzgussform;
- FIG 2: eine schematische Darstellung geöffneten einer Spritzgussform mit eingebrachter Folie;
- FIG 3: eine schematische Darstellung einer geschlossenen Spritzgussform;
- FIG 4: eine schematische Darstellung einer geöffneten Spritzgussform nach dem Spritzgussvorgang;
- FIG 5: eine elektrische Baugruppe;
- FIG 6: eine Seitenansicht der elektrischen Baugruppe;

Sämtliche in den Anmeldeunterlagen offenbarten Merkmale werden als erfindungswesentlich beansprucht, sofern sie einzelnen und/oder in Kombination gegenüber dem Stand der Technik neu sind.

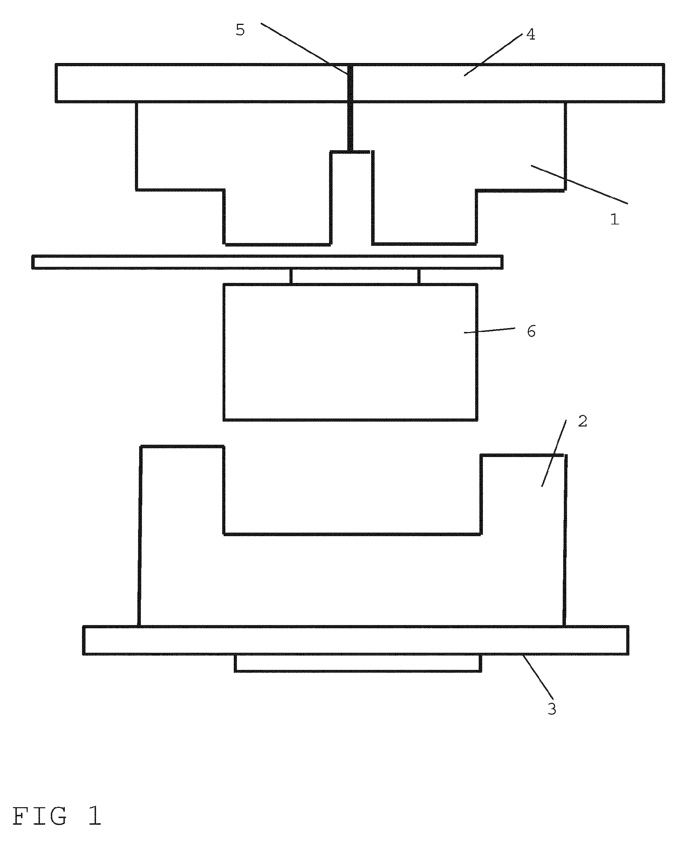

Es werden in der Figurenbeschreibung zu den Figuren FIG 1 bis FIG 6 für gleiche Elemente gleiche Bezugszeichen verwendet. Dies dient der besseren Verständlichkeit und Übersichtlichkeit der Figurenbeschreibung. Bezugszeichen sind in den jeweiligen Figuren nur dann verwendet, wenn sie für die Beschreibung der Erfindung im Zusammenhang mit den jeweiligen Figuren von Bedeutung sind.

In FIG 1 ist eine schematische Darstellung einer geöffneten Spritzgussform dargestellt. Die Spritzgussform besteht aus zwei Werkzeughälften 1, 2, die jeweils auf einer Abspannplatte 3, 4 fixierbar angeordnet sind. In einer der Werkzeughälften 1 ist ein Angusskanal 5 integriert, in welchen, wenn die Spritzgussform geschlossen ist, entsprechend flüssiger Kunststoff eingepresst wird und den verbleibenden Hohlraum zwischen den geschlossenen Werkzeughälften füllt.

In FIG 1 ist ein Stempel 6 mit einer entsprechenden Vorrichtung angeordnet, welcher in die zweite Werkzeughälfte 2 passgenau einfügbar ist. Dieser Stempel 6 dient dazu um eine Folie 7, die in FIG 1 nicht dargestellt ist, in die Werkzeughälfte 2 einzuführen und dort passgenau anzuordnen. Beim Spritzgussvorgang wird der Stempel 6, der gemäß FIG 1 zwischen beiden Werkzeughälften 1, 2 angeordnet ist entfernt, sodann wird die erste Werkzeughälfte 1 auf die zweite Werkzeughälfte 2 aufgebracht die Spritzgussform entsprechend geschlossen; sodann wird der verbleibende Hohlraum zumindest teilweise mit flüssigem bzw. fließfähigen und entsprechend erhitzen und aufgeschmolzenen Kunststoff gefüllt.

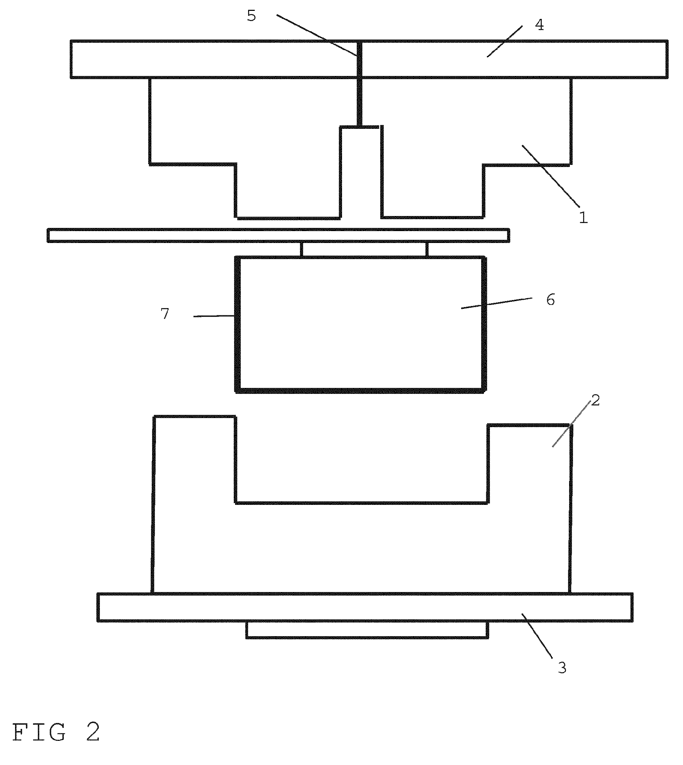

In FIG 2 ist um den Stempel 6 die Folie 7 angeordnet. Bei der Folie 7 handelt es sich um eine Folie, auf welcher bzw. in welcher elektrische Komponenten bzw. elektronische Komponenten angeordnet sind. Diese Folie 7 kann auch in anderer Weise als in FIG 2 dargestellt in die zweite Werkzeughälfte 2 eingebracht werden. So kann diese Folie 7 von einer Rolle abgerollt und über die zweite Werkzeughälfte 2 geführt werden. Beim Schließvorgang der beiden Werkzeughälften 1, 2 wird die Folie 7 in die zweite Werkzeughälfte 2 eingefügt.

Problematisch hierbei ist aber, dass dann unter Umständen ein Hohlraum zwischen der Folie 7 und der zweiten Werkzeughälfte 2 verbleiben kann. Um dies zu vermeiden ist in FIG 2 der Stempel 6 vorgesehen.

In einer vorteilhaften Ausgestaltung der Erfindung ist vorgesehen, dass in der zweiten Werkzeughälfte 2 Luftkanäle angeordnet sind, welche die Folie 7 in die Werkzeughälfte 2 einsaugen und damit ein Anliegen der Folie 7 an den Innenseiten oder zumindest der Bodenfläche der Werkzeughälfte 2 gewährleisten.

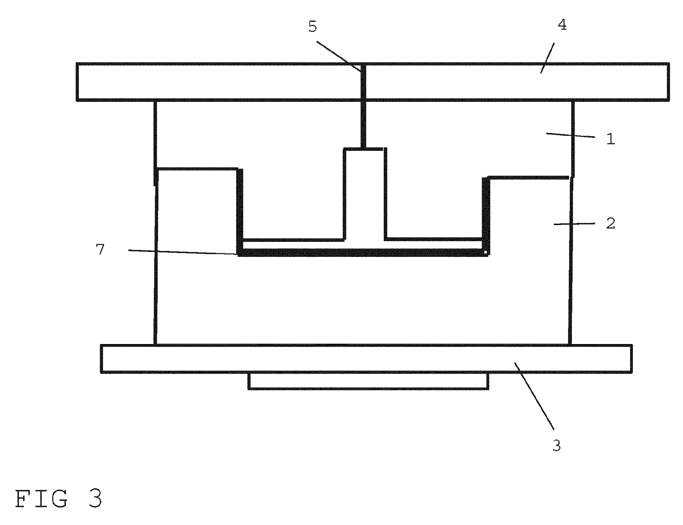

In FIG 3 ist der Zustand dargestellt, wenn die Spritzgussform geschlossen ist. Die Folie 7 liegt dann an der Innenwandung der zweiten Werkzeughälfte 2 an, zumindest an zwei Innenwandungen, und wird an den seitlichen Bereichen von der ersten Werkzeughälfte 1 gehalten und dort fixiert. Die Folie 7 ist durch den Stempel 6, der in FIG 3 bereits herausgeführt worden ist, in die zweite Werkzeughälfte 2 pass- und formgenau eingefügt worden. Sodann, wenn die Spritzgussform geschlossen ist, wird über den Angusskanal 5 Kunststoff in die Spritzgussform eingefügt, der sich mit der der ersten Werkzeugform zugewandten Seite der Folie 7 verbindet.

In vorteilhafter Weise ist vorgesehen, dass die gesamte Folienseite 7, die zur ersten Werkzeughälfte 1 gerichtet ist, mit Kunststoff 8 hinterspritzt wird. Zur besseren Anhaftung des Kunststoffes 8 ist die Folie 7 auf dieser Seite vorbehandelt oder besteht aus einem Folienstoff, der mit dem Kunststoff 8 eine besonders gute mechanische Verbindung eingeht.

In einer weiteren vorteilhaften Ausgestaltung der Erfindung ist vorgesehen, dass nur eine partielle oder teilweise Hinterspritzung erfolgt.

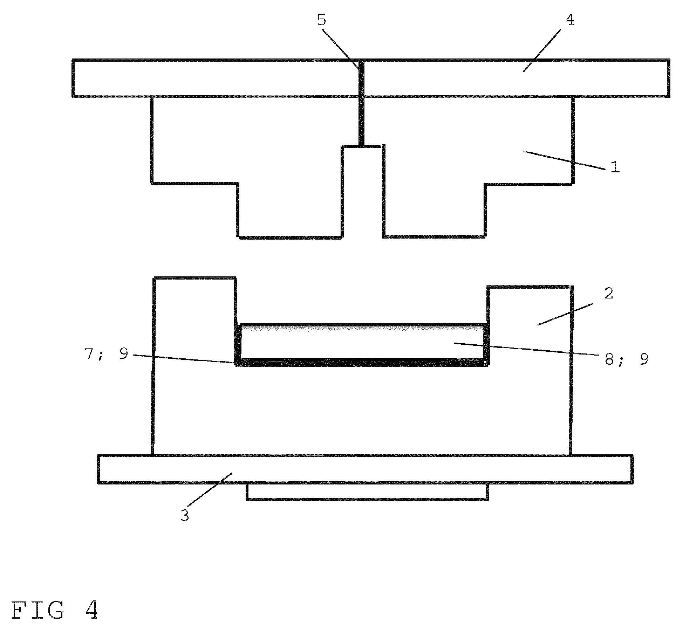

In FIG 4 ist dargestellt, wenn nach dem Spritzgussvorgang die erste Werkzeughälfte 1 wieder von der zweiten Werkzeughälfte 2 entfernt ist. Durch den Spritzgussvorgang hat sich aus dem Kunststoff 8 und der Folie 7, die im Rahmen des Spritzgussvorgangs verbunden wurden, die elektrische Baugruppe 9 gebildet. Die elektrische Baugruppe 9 besteht nunmehr aus einer chemisch schlüssigen Verbindung zwischen der Folie 7 und dem Kunststoff 8. Nach dem Abkühlen wird die elektrische Baugruppe 9 aus der Werkzeughälfte 2 entnommen.

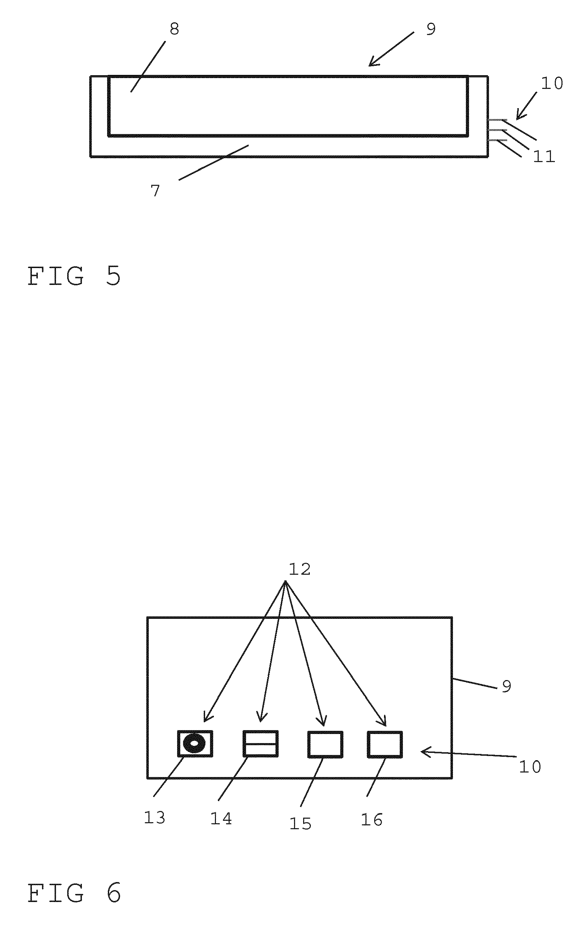

In FIG 5 ist ein Schnitt durch die elektrische Baugruppe 9 dargestellt. Es ist der Kunststoff 8, der mit der Folie 7, eine form- und kraftschlüssige und chemische Verbindung eingegangen ist, dargestellt. Die auf der Folie 7 angeordneten elektrischen Komponenten bzw. elektronischen Komponenten, die in FIG 5 nicht dargestellt sind, sind weiterhin mit der Folie 7 verbunden. Es muss aber nunmehr eine Kontaktierung der Folie 7 und deren Komponenten, somit der entstandenen elektrischen Baugruppe 9, erfolgen. Hierzu ist vorgesehen, dass in einer speziellen Ausführungsform, vor dem Spritzgussvorgang der Anschlussbereich 10 der Folie 7 mit Kontaktelementen versehen wird. In der Ausführung sind dies Kontaktstifte, die auf die Kontaktstellen, die im Anschlussbereich 10 der Folie 7 vorhanden sind, elektrisch verbunden werden. Dies kann zum einen durch eine thermische Verbindung während des Spritzgussvorgangs erfolgen oder aber die zweite Werkzeughälfte 2 ist derart ausgestaltet, dass die Kontaktstifte 11 vor dem Spritzgussvorgang und vor dem Einbringen der Folie 7 in die Werkzeughälfte 2 in die Werkzeughälfte 2 eingebracht werden in der Weise, dass der Anschlussbereich 11 mit den entsprechenden Kontaktstellen im Gegenkontakt zu den Kontaktstiften 11 angeordnet ist, und sodann im Rahmen des Spritzgussvorgangs eine Verbindung erfolgt.

In einer besonders vorteilhaften Ausgestaltung der Erfindung ist vorgesehen, dass chemische Katalysatoren an den Kontaktstellen angeordnet sind, sodass durch diese eine elektrische und mechanische Verbindung zwischen der Kontaktstellen und den Kontaktstiften 11 während des Spritzgussvorganges bewirkt wird.

Im Rahmen des Spritzgussvorgangs erfolgt eine form- und kraftschlüssige Verbindung zwischen den Kontaktstellen des Kontaktbereichs 10 der Folie 7 und den Kontaktstiften 11.

Nach der Entnahme der elektrischen Baugruppe 9 aus der Werkzeughälfte 2 weist die entsprechend hergestellte elektrische Baugruppe Kontaktstellen mit Kontaktstifte 11 auf, über welche problemlos eine Kontaktierung der elektronischen Komponenten erfolgen kann.

In FIG 6 ist eine weitere konkrete Ausgestaltung der elektrischen Baugruppe 9 dargestellt. Hier sind entsprechende Kontaktstellen 12 in Form von Buchsen 13 bis 16 oder Steckern vorgesehen. Diese werden während des Spritzgussvorganges hergestellt. Im vorliegenden Fall handelt es sich bei der Kontaktstelle 13 um eine Rundkontaktbuchse, bei der Kontaktstelle 14 um eine USB-Buchse, bei der Kontaktstelle 15 um eine LAN-Buchse und bei der Kontaktstelle 16 um eine Klemmschiene.

Die entsprechenden elektrischen Kontaktierungsstellen sind bereits auf der Folie 7 vorhanden. Die Folie 7 wird beispielsweise im 2K-Verfahren an diesen Stellen mit einem elektrisch leitenden Kunststoff, ehe der erste Kunststoff 8 in die Spritzgussform eingebracht wird, eingespritzt und entsprechend verbunden. Die Form der Buchsen ist entsprechend vorwählbar und durch entsprechende Ausgestaltung des Spritzgusswerkzeuges entsprechend realisierbar.

Wie die Kontaktstellen 12 in Form der Buchsen 13 bis 16 gemäß FIG 6 sind im 2K- oder im 3K-Verfahren hergestellt.

In einer weiteren vorteilhaften Ausgestaltung der Erfindung ist vorgesehen, dass, nachdem die elektrische Baugruppe 9, wie vorbeschrieben hergestellt ist, die Kontaktstifte 11 durch den Kunststoff 8 hindurch an die Anschlussbereiche 10 angeschweißt werden, wobei die entsprechenden Einbringstellen durch einen Laserschweißvorgang, durch eine Bohrung oder durch ein sonstiges chemisches Verfahren eingebracht werden.

In einer besonders vorteilhaften Ausgestaltung der Erfindung werden die Kontaktstifte 11 erhitzt und dann in die elektrische Baugruppe 9 eingepresst. Hierbei schmilzt der Kunststoff 8 auf, die Kontaktstifte 11 dringen in die elektrische Baugruppe 9 im Abschlussbereich 10 ein und kontaktieren die Kontaktstellen auf der Folie 7. Sind die Kontaktstifte 11 entsprechend eingebracht kühlen diese ab, der angeschmolzene Kunststoff 8 kühlt ab, verfestigt sich und die Kontaktstifte 11 werden dann fest gehalten.

### Bezugszeichenliste

- 1: Werkzeughälfte
- 2: Werkzeughälfte
- 3: Aufspannplatte
- 4: Aufspannplatte
- 5: Angusskanal
- 6: Stempel
- 7: Folie
- 8: Kunststoff
- 9: elektrische Baugruppe
- 10: Anschlussbereich
- 11: Kontaktstift(e)
- 12: Kontaktstellen
- 13: Rundkontaktbuchse
- 14: USB-Buchse
- 15: LAN-Buchse
- 16: Schienenklemme

## Patentansprüche

1. Verfahren zur Herstellung einer elektrischen Baugruppe (9) mit folgenden Schritten:
- Einbringen einer Folie (7) in eine Spritzgussform (1, 2), die aus mindestens zwei Werkzeughälften (1, 2) besteht, wobei die Folie (7) mindestens eine auf oder in der Folie (7) angeordnete elektrische Komponente und mindestens einen elektrischen Anschlussbereich (10) mit elektrischen Kontaktstellen zur elektrischen Kontaktierung der mindestens einen elektrischen Komponente besitzt,
- Fixierung der Folie (7) in der Spritzgussform (1, 2),
- zumindest partielles Hinterspritzen der Folie (7) in der Spritzgussform (1, 2) mit einem ersten Kunststoff (8), wobei
lit a) der Anschlussbereich (10) zur elektrischen Kontaktierung der mindestens einen elektrischen Komponente an mindestens einer Seite der Folie (7) nicht mit dem ersten Kunststoff (8) hinterspritzt wird,
oder
lit b) vor dem Hinterspritzen der Folie (7) mit dem ersten Kunststoff (8) auf dem Anschlussbereich (10) der Folie (7) zur elektrischen Kontaktierung Kontaktelemente aufgebracht oder in die Spritzgussform (1, 2) beim Anschlussbereich (10) der Folie (7) eingebracht und in der Spritzgussform fixiert werden, und diese Kontaktelemente eine elektrische Kontaktierung mit den elektrischen Kontaktstellen des Anschlussbereichs (10) der Folie (7) herstellen,
oder
lit c) vor dem Hinterspritzen der Folie (7) mit dem ersten Kunststoff (8) der Anschlussbereich (10) der Folie (7) mit einem zweiten Kunststoff zumindest partiell hinterspritzt oder umspritzt wird,
oder
lit d) die Folie (7) vollständig mit dem ersten Kunststoff (8) hinterspritzt wird;
- Entnahme der elektrischen Baugruppe aus der Spritzgussform.

2. Verfahren nach Patentanspruch 1, **dadurch gekennzeichnet, dass** beim Verfahrensschritt nach lit a) ein vom Kunststoff (8) freier Bereich um den Anschlussbereich (10) ausgebildet wird, der zu elektrischen Kontaktierung der elektrischen Baugruppe (9) der Folie (7) mittels Kontaktmitteln dient.

3. Verfahren nach Patentanspruch 2, **dadurch gekennzeichnet, dass** der vom Kunststoff (8) freie Bereich um den Anschlussbereich (10) als mindestens eine Vertiefung in die elektrische Baugruppe (9) ausgebildet wird oder der vom Kunststoff (8) freien Bereich um den Anschlussbereich (10) nach dem Spritgussvorgang einen Hohlraum ausbildet.

4. Verfahren nach Patentanspruch 3, **dadurch gekennzeichnet, dass** die Vertiefung oder der Hohlraum die Form einer Steckvorrichtung ausbildet.

5. Verfahren nach Patentanspruch 1, **dadurch gekennzeichnet, dass** beim Verfahrensschritt nach lit b) als Kontaktelemente Kontaktstifte (11) angeordnet werden.

6. Verfahren nach Patentanspruch 5, **dadurch gekennzeichnet, dass** die Kontaktstifte (11) derart angeordnet werden, dass die elektrische Baugruppe (9) mittels der Kontaktstifte in eine Steckerleiste einer anderen Baugruppe einsetzbar ist.

7. Verfahren nach Patentanspruch 5 oder 6, **dadurch gekennzeichnet, dass** die Kontaktstifte (11) in der zweiten Werkzeughälfte (2) vor dem einlegen der Folie (7) eingefügt werden und durch eine Vorrichtung in der zweiten Werkzeughälfte (2) fixiert werden in einer Position, dass die einzufügende Folie (7) mit ihrem Anschlussbereich (10) und den dortigen Kontaktstellen auf den Kontaktstifte (11) zu liegen kommt.

8. Verfahren nach einem der Patentansprüche 5 bis 7 **dadurch gekennzeichnet, dass** die Kontaktstifte (11) in der zweiten Werkzeughälfte (2) mit den Kontaktstellen der Folie (7) vor dem Einspritzen des ersten Kunststoffes (8) mittels eines Lasers verschweißt oder mittels eines Klebers fixiert werden.

9. Verfahren nach Patentanspruch 1, **dadurch gekennzeichnet, dass** beim Verfahrensschritt nach lit c) in einem ersten Schritt des Einspritzens von Kunststoff zunächst ein zweiter Kunststoff eingespritzt wird, der mit einer jeden der Kontaktstellen des Kontaktbereiches (10) der Folie (7) eine Verbindung eingeht, ohne dass sich diese Bereiche berühren und sich der zweite Kunststoff bis zum Rand der zweiten Werkzeugform (2) erstreckt.

10. Verfahren nach Patentanspruch 9, **dadurch gekennzeichnet, dass** nach dem Einspritzen des zweiten Kunststoffes die Folie (7) mit dem ersten Kunststoff hinterspritzt wird und durch den ersten Kunststoff (8) der zweite Kunststoff zumindest partiell umhüllt wird.

11. Verfahren nach Patentanspruch 9 oder 10, **dadurch gekennzeichnet, dass** der erste Kunststoff (8) und der zweite Kunststoff in einem 2K-Verfahren verarbeitet werden.

12. Verfahren nach einem der vorangehenden Patentansprüche 9 bis 11, **dadurch gekennzeichnet, dass** zum ersten Kunststoff (8) und dem zweiten Kunststoff in einem 3K-Verfahren ein dritter Kunststoff in die Spritzgussform (1, 2) eingebracht wird und der erste Kunststoff (8), der zweite Kunststoff und der dritte Kunststoff am Anschlussbereich (10) um eine jede Kontaktstelle (12) Buchsen (13 bis 16) ausbilden.

13. Verfahren nach Patentanspruch 12, **dadurch gekennzeichnet, dass** die Buchsen (13 bis 16) zum Anstecken von Steckern vorgesehen werden, wobei die erste Buche (13) eine Rundkontaktbuchse, die zweite Buchse (14) eine USB-Buchse, die dritte Buchse (15) eine LAN-Buchse und die vierte Buchse (16) eine Schienenklemme realisiert.

14. Verfahren nach Patentanspruch 1 oder 9, **dadurch gekennzeichnet, dass** gemäß Verfahrensschritt lit c) oder lit d) nach der Entnahme der elektrischen Baugruppe im Anschlussbereich (10) Löcher in die elektrische Baugruppe eingebracht werden, die bis zu den Kontaktstellen des Anschlussbereich (10) reichen und die Kontaktstellen des Anschlussbereichs (10) freilegen.

15. Verfahren nach Patentanspruch 14, **dadurch gekennzeichnet, dass** die Löcher mit einem Bohrer oder einem Laser eingebracht werden.

16. Verfahren nach Patentanspruch 14 oder 15, **dadurch gekennzeichnet, dass** in die Löcher Kontaktstifte eingefügt und verklebt oder verschweißt oder heißverstemmt werden.

17. Verfahren nach einem der vorangehenden Patentansprüche, **dadurch gekennzeichnet, dass** als erster Kunststoff (8) ein elektrisch nicht leitfähiger Kunststoff verwendet wird, als zweiter Kunststoff ein elektrisch leitfähiger Kunststoff und als dritter Kunststoff ein elektrisch nicht leitfähiger Kunststoff eingesetzt wird.

18. Elektrische Baugruppe hergestellt nach einem oder mehreren der vorhergehenden Verfahrensansprüche 1 bis 17 aufweisend zumindest eine elektrische Komponente, einen zumindest partiell aus einem ersten Kunststoff (8) bestehenden Körper, wobei die zumindest eine elektrische Komponente der elektrischen Baugruppe von einem ersten Kunststoff (8) umschlossenen ist, einen Anschlussbereich (10) mit aus dem Körper herausstehenden Kontaktstiften, welche die zumindest eine elektrische Komponente kontaktieren oder in den Körper eingebrachte Kontaktbuchsen, welche die zumindest eine elektrische Komponente kontaktieren.
